(19) Europäisches Patentamt
European Patent Office
Office européen des brevets

(11) **EP 4 578 665 A1**

(12) **EUROPEAN PATENT APPLICATION**

(43) Date of publication:
**02.07.2025 Bulletin 2025/27**

(21) Application number: **24217393.8**

(22) Date of filing: **04.12.2024**

(51) International Patent Classification (IPC):
**B60C 1/00** (2006.01)    **B60C 3/04** (2006.01)
**C08K 3/04** (2006.01)    **C08K 3/36** (2006.01)
**C08L 9/06** (2006.01)

(52) Cooperative Patent Classification (CPC):
**B60C 1/0016; B60C 3/04; C08L 9/06**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.12.2023 JP 2023222819**

(71) Applicant: **SUMITOMO RUBBER INDUSTRIES, LTD.**
**Kobe-shi, Hyogo 651-0072 (JP)**

(72) Inventor: **MATSUI, Tomoya**
**Kobe-shi, 651-0072 (JP)**

(74) Representative: **TBK**
**Bavariaring 4-6**
**80336 München (DE)**

(54) **TIRE**

(57) It is an object of the present invention to provide a tire that is excellent in wet grip performance after long-term use. Provided is a tire comprising a tread part, wherein a rubber layer of the tread part is composed of a rubber composition comprising a rubber component comprising at least one rubber selected from the group consisting of a styrene-butadiene rubber and an isoprene-based rubber, and a copolymer resin comprising styrene and cyclopentadiene as monomer components, and wherein $W_L$, $G$, and $St$ satisfy the following inequalities (1) and (2),

$$(1)\ G/W_L < 0.0145$$

$$(2)\ St/(G/W_L) > 8$$

where $W_L$ represents a maximum load capacity, in kg, of the tire, $G$ represents a weight, in kg, of the tire, and $St$ represents a total styrene amount, in % by mass, in the rubber composition based on 100% by mass of the rubber component.

FIG. 1

EP 4 578 665 A1

**Description**

TECHNICAL FIELD

The present invention relates to a tire.

BACKGROUND OF THE INVENTION

Recently, an improvement in wet grip performance of a tire has been desired. JP 2020-41035 A describes that a tire rubber composition comprising a predetermined amount of a certain conjugated diene-based rubber and a predetermined amount of a conjugated diene-based polymer as a rubber component and further comprising a predetermined amount of a certain silica and a predetermined amount of a certain tetrazine compound can improve wet grip performance.

SUMMARY OF THE INVENTION

However, since a tread rubber is subjected to a centrifugal force during running, a softening agent gradually elutes from the rubber. Thus, there is a problem that wet grip performance deteriorates as a tire is used repeatedly.
It is an object of the present invention to provide a tire that is excellent in wet grip performance after long-term use thereof.
The present invention relates to the following tire.
A tire comprising a tread part,
wherein a rubber layer of the tread part is composed of a rubber composition comprising:

a rubber component comprising at least one rubber selected from the group consisting of a styrene-butadiene rubber and an isoprene-based rubber; and
a copolymer resin comprising styrene and cyclopentadiene as monomer components; and
wherein $W_L$, G, and St satisfy the following inequalities (1) and (2),

$$(1) \ G/W_L < 0.0145$$

$$(2) \ St/(G/W_L) > 8$$

where $W_L$ represents a maximum load capacity, in kg, of the tire, G represents a weight, in kg, of the tire, and St represents a total styrene amount, in % by mass, in the rubber composition based on 100% by mass of the rubber component.

According to the present invention, a tire can be provided which is excellent in wet grip performance after long-term use thereof.

BRIEF DESCRIPTION OF THE DRAWINGS

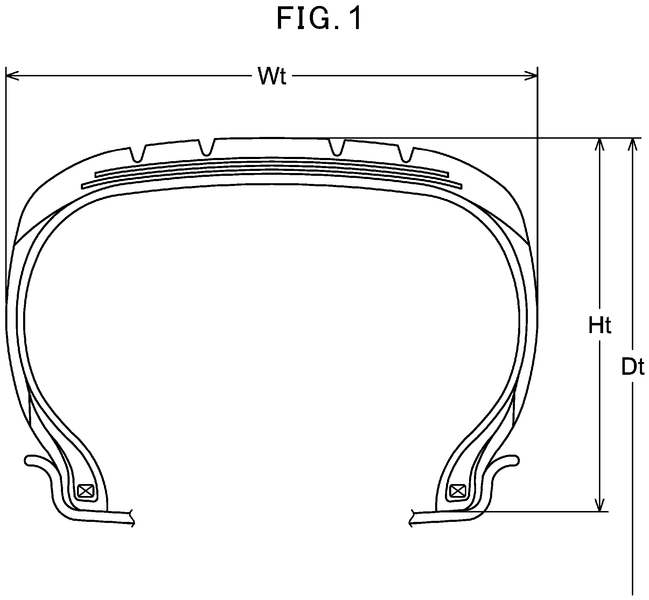

FIG. 1 is a view showing a tire cross-sectional width Wt, a tire cross-sectional height Ht, and a tire outer diameter Dt on a cross section of a tire.

DETAILED DESCRIPTION

A tire that is one embodiment of the present invention will be described below. The tire of the present embodiment is a tire comprising a tread part, wherein a rubber layer of the tread part is composed of a rubber composition comprising a rubber component comprising at least one rubber selected from the group consisting of a styrene-butadiene rubber and an isoprene-based rubber; and a copolymer resin comprising styrene and cyclopentadiene as monomer components, and wherein $W_L$, G, and St satisfy the following inequalities (1) and (2),

$$(1) \ G/W_L < 0.0145$$

$$(2) \ St/(G/W_L) > 8$$

where $W_L$ represents a maximum load capacity, in kg, of the tire, G represents a weight, in kg, of the tire, and St represents a total styrene amount, in % by mass, in the rubber composition based on 100% by mass of the rubber component.

Although it is not intended to be bound by a theory, in the present invention, the following can be considered as a mechanism by which wet grip performance after long-term use is improved. That is, (1) a copolymer resin comprising styrene and cyclopentadiene as monomer components is less likely to elute from a rubber because its styrene part has a high compatibility with a styrene-butadiene rubber and its cyclopentadiene and/or dicyclopentadiene part (DCPD part) has a high compatibility with an isoprene-based rubber. Accordingly, it is considered that such combination contributes to maintenance of wet grip performance. (2) When a total styrene amount in a rubber composition is equal to or greater than a certain amount, friction between molecules of the bulky styrene part increases. Accordingly, energy loss is increased, which is considered to contribute to an improvement in wet grip performance. (3) When a tire weight is relatively low, a centrifugal force acting during running is suppressed, a softening agent becomes less likely to elute from the rubber composition, which is thus considered to contribute to maintenance of wet grip performance. Then, it is considered that, with cooperation of (1) to (3), wet grip performance can be maintained even after long-term use.

The right side of the inequality (1) is preferably 0.140, more preferably 0.135. When a stricter condition is satisfied in the inequality (1), it is considered that the effect of improving wet grip performance after long-term use by the present invention is further exerted.

The rubber component preferably comprises a butadiene rubber.

The rubber component preferably comprises a butadiene rubber, a styrene-butadiene rubber, and an isoprene-based rubber.

The rubber composition preferably comprises silica. When the rubber composition comprises silica, flexibility can be improved while suppressing heat generation of a rubber. As a result, minute deformation is easily caused, which is considered to contribute to an improvement in wet grip performance.

It is preferable that the rubber composition comprises silica and carbon black and that, when a content, in parts by mass, of the silica based on 100 parts by mass of the rubber component is referred to as $A_{SIL}$ and a content, in parts by mass, of the carbon black based on 100 parts by mass of the rubber component is referred to as $A_{CB}$, $A_{SIL}/A_{CB}$ is greater than 1.0. It is considered that the rubber component reinforced by the silica contributes to an improvement in wet grip performance.

The copolymer resin is preferably a DCPD-C9 resin.

In the present specification, numerical values of upper limits and lower limits related to "or more", "or less", and "to" for the descriptions of numerical ranges can be arbitrarily combined with each other, and additionally, numerical values in Examples can be also combined with these upper limits and these lower limits. Moreover, in the case that a numerical range is specified using the word "to", unless otherwise noted, such a case means that numerical values at the both ends of the numerical range are included in the numerical range. Additionally, in the present specification, a numerical range shown as a range including the values at its both ends can be interpreted as simultaneously showing a numerical range only including either one of the numerical values at its both ends and a numerical range not including both of the numerical values at its both ends as long as such a range is not inconsistent with the spirit of the present invention.

[Definition]

A "tread part" refers to a member comprising a part forming a tread ground-contacting surface of tire and is a member arranged on the outer side, on a cross-sectional surface in a tire radial direction, with respect to tire skeleton-reinforcing and forming members such as a reinforcing layer, a carcass layer, and the like when any of the tire skeleton-reinforcing and forming members is arranged on the inner side in the tire radial direction.

A "rubber component of a rubber composition" refers to a component contributing to crosslinking in the rubber composition and is generally a component having a weight-average molecular weight (Mw) of 10000 or more.

A "total styrene amount St in a rubber composition" is a total styrene amount, in % by mass, in the rubber composition based on 100% by mass of a rubber component and is a total amount obtained by summing up a content of a styrene part contained in the rubber component and contents of styrene parts contained in compounding agents other than the rubber component. The styrene parts are not particularly limited as long as they are groups each having a styrene structure, and examples of the styrene parts include, for example, styrene, α-methylstyrene, vinyltoluene, chlorostyrene, and the like. That is, first of all, for each rubber component, a value obtained by multiplying a content, in % by mass, of a styrene part of each rubber component by a mass fraction in the rubber component is calculated, and a total sum value, in % by mass, is calculated by adding up these values. Next, for styrene part-containing compounding agents other than the rubber component that are contained in the rubber composition, a value obtained by multiplying a content, in % by mass, of a styrene part of each styrene part-containing compounding agent by a mass fraction based on 100 parts by mass of the rubber component is calculated, and a total sum value, in % by mass, is calculated by adding up them. A value obtained by summing up these total sum values is used as a total styrene amount St, in % by mass. Therefore, St is calculated by {Σ (a content (% by mass) of a styrene part of each styrene part-containing rubber × a content (% by mass) of each styrene part-containing rubber in a rubber component) / 100 + Σ (a content (% by mass) of a styrene part of each styrene part-containing compounding agent other than the rubber component × a compounding amount (parts by mass) of each styrene part-containing compounding agent based on 100 parts by mass of the rubber component) / 100}. For example, when the rubber component consists of 30% by mass of a first SBR (styrene content: 25% by mass), 60% by mass of a second SBR (styrene content: 27.5% by mass), and 10% by mass of a BR, and the rubber composition further comprises, in addition to the rubber component, 20 parts by mass of a first resin having a styrene part (styrene content: 5% by mass) based on 100 parts by mass of the rubber component and 10 parts by mass of a second resin having a styrene part (styrene content: 1% by mass) based on 100 parts by mass of the rubber component, the total styrene amount St in the rubber composition based on 100% by mass of the rubber component is 25.1% by mass = {(25×30/100+27.5×60/100+0×10/100) +(5×20/100+1×10/100)}.

A "standardized state" is a state in which the tire is rim-assembled to a standardized rim, filled with air at a standardized internal pressure, and applied with no load.

A "dimension of each part of a tire" is a value specified in a standardized state for one appearing on the outer surface of the tire, unless otherwise specified, while it is a value specified, for example, in a condition where the tire is cut on a plane including a tire rotation axis and the cut tire piece is held with a rim width of a standardized rim, for one present inside the tire or on a tire cutting surface.

A "standardized rim" is a rim, in a standard system including a standard on which the tire is based, defined for each tire by the standard. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Besides, in a case of a tire that is not defined by the standard, the "standardized rim" refers to a rim having the narrowest rim width among rims that can be rim-assembled to the tire, that can maintain an internal pressure (that is, do not cause air leakage between the rim and the tire), and that have the smallest rim diameter.

A "standardized internal pressure" is an air pressure, in a standard system including a standard on which the tire is based, defined for each tire by the standard, for example, it refers to a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the standardized internal pressure conforms to its standard. Besides, in the case of tires that are not defined by the standard, the standardized internal pressure shall refer to a standardized internal pressure (250 KPa or more) of another tire size (specified in the standard) for which the standardized rim is described as a standard rim, and when a plurality of standardized internal pressures of 250 KPa or more are described, it shall refer to the minimum value among them.

A "standardized load" is a load, in a standard system including a standard on which the tire is based, defined for each tire by the standard, for example, a "MAXIMUM LOAD CAPACITY" in JATMA, a "LOAD CAPACITY" in ETRTO, or a maximum value described in Table "TIRE LOAD LIMITS AT VARIOUS COLD INFLATION PRESSURES" in TRA, to which references are made in this order as in cases of a standardized rim and a standardized internal pressure, and if there is an applicable size at the time of the reference, the load conforms to its standard. Then, in the case of tires that are not defined by the standard, a maximum load capacity $W_L$ obtained by another calculation is defined as a standardized load.

A "maximum load capacity $W_L$" is calculated by the following equation. "V" represents a virtual volume, in $mm^3$, of a tire, "Dt" represents a tire outer diameter, in mm, in a standardized state, "Ht" represents a cross-sectional height, in mm, of the tire in a tire radial direction on a cross section of the tire taken along a plane including a tire rotation axis, and "Wt" represents a cross-sectional width, in mm, of the tire in the standardized state. When R represents a rim diameter of the tire, Ht can be calculated by the following equation: (Dt-R)/2. Wt is a value obtained by excluding, if any, patterns, letters, or the like on the side surface of the tire. Besides, the maximum load capacity has the same meaning as a standardized load.

$$W_L = 0.000011 \times V + 175$$

$$V = [(Dt/2)^2 - (Dt/2 - Ht)^2] \times \pi \times Wt$$

A "tire weight" refers to a weight of a single tire excluding a weight of a rim. On the other hand, in a case where a member consisting of a sponge and a sealant, a sensor member, or the like is provided in a tire lumen, the tire weight shall be a weight including a weight of such a member.

A "softening agent" is a material giving a rubber component plasticity and includes both a plasticizing agent that is liquid (in a liquid state) at normal temperature (25°C) and a plasticizing agent that is solid at normal temperature (25°C). Examples of the softening agent include a resin, oil, a liquid rubber, an ester-based plasticizing agent, and the like. A "content of a softening agent" also includes an amount of a softening agent that is contained in a rubber component extended by the softening agent.

[Measuring method]

A "content of a styrene part" is calculated by pyrolysis gas chromatography. Besides, in the present specification, "pyrolysis gas chromatography" refers to a method of heating a sample by a pyrolysis device, separating individual components contained in a gas-phase component generated by this heating from one another using a separation column, and analyzing each isolated component.

A "vinyl content (1,2-bond butadiene unit amount)" is calculated by pyrolysis gas chromatography like the content of a styrene part described above.

A "cis content (cis-1,4-bond butadiene unit amount)" is a value calculated in accordance with JIS K 6239-2:2017 by an infrared absorption spectrometry and is applied to a rubber component having a repeating unit derived from butadiene such as a BR and the like.

A "glass transition temperature Tg" is a value calculated in accordance with JIS K 7121 by differential scanning calorimetry (DSC) and is applied to, for example, an SBR. For example, in a case where an SBR comprises extending oil, measurement is made for a sample from which the extending oil is removed using acetone in accordance with JIS K 6229.

A "weight-average molecular weight (Mw)" can be calculated in terms of a standard polystyrene based on measurement values obtained by a gel permeation chromatography (GPC) (for example, GPC-8000 Series manufactured by Tosoh Corporation, detector: differential refractometer, column: TSKgel (Registered Trademark) SuperMultiporeHZ-M manufactured by Tosoh Corporation). For example, it is applied to an SBR, a BR, and the like.

An "$N_2SA$ of carbon black" is measured according to JIS K 6217-2:2017.

An "$N_2SA$ of silica" is measured by a BET method according to ASTM D3037-93.

An "average primary particle size" is values calculated by an arithmetic mean of particle sizes of 400 particles which are photographed with a transmission or scanning electron microscope. In a case that the particle is in a spherical shape, a diameter of the sphere is defined as a particle size, and in cases of shapes other than the spherical shape, an equivalent circle diameter (positive square root of "$4 \times$(area of particle)$/-\pi$") calculated from a microscope image is defined as a particle size. The average primary particle size is applied to silica, carbon black, etc.

A "softening point of a resin" is a temperature at which a sphere drops when the softening point specified in JIS K 6220-1:2015 7.7 is measured with a ring and ball softening point measuring device.

[Tire]

The tire that is one embodiment of the present invention will be described below by appropriately using the drawings. However, the drawings used are ones merely showing one embodiment specifically, and the present invention is not limited by these drawings.

The tire relating to the present embodiment is a tire comprising a tread part having a rubber layer composed of a predetermined rubber composition, wherein $W_L$, G, and St satisfy the following inequalities (1) and (2) when a maximum load capacity, in kg, of the tire is referred to as $W_L$, a weight, in kg, of the tire is referred to as G, and a total styrene amount, in % by mass, in the rubber composition based on 100% by mass of the rubber component is referred to as St,

$$(1) \ G/W_L < 0.0145$$

$$(2) \ St/(G/W_L) > 8.$$

The tread part has only to have a rubber layer composed of the predetermined rubber composition. For example, in a case where the tread part consists of one layer, this one layer corresponds to the rubber layer composed of the predetermined rubber composition, and in a case where the tread part is composed of a plurality of layers including a cap tread and a base tread, one of these layers may correspond to the rubber layer composed of the predetermined rubber composition. However, in the case where the tread part is composed of the plurality of layers, it is preferable that a rubber layer constituting a tread ground-contacting surface, that is, a cap tread is the rubber layer composed of the predetermined rubber composition.

<Inequality (1)>

A value on the right side of the inequality (1) is preferably 0.0144, more preferably 0.0142, further preferably 0.140, further preferably 0.139, further preferably 0.137, further preferably 0.136, further preferably 0.135. A lower limit of a value of $G/W_L$ on the left side of the inequality (1) is not particularly limited and is, for example, 0.0100.

Regarding the inequality (1), the tire weight can be increased or decreased by adjusting a volume of each of members constituting the tire or the like, and the maximum load capacity can be increased or decreased by adjusting a strength of each of members constituting the tire. As a result, a value on the left side of the inequality (1) can be adjusted to be less than a certain value.

<Inequality (2)>

A value on the right side of the inequality (2) is preferably 10, more preferably 20, further preferably 30, further preferably 100, further preferably 900, further preferably 920, further preferably 950, further preferably 990, further preferably 1100, further preferably 1200. An upper limit of a value of $St/(GIW_L)$ on the left side of the inequality (2) is not particularly limited and is, for example, 3000.

Regarding the inequality (2), since St that is the numerator of the fraction on the left side is a total amount of a content of a styrene part contained in a rubber component and contents of styrene parts contained in compounding agents other than the rubber component, a value of St can be increased by using a rubber component and compounding agents each containing a high content of a styrene part, and conversely, the value of St can be decreased by using a rubber component and compounding agents each containing a low content of a styrene part. On the other hand, since $G/W_L$ that is a denominator of the fraction on the left side of the inequality (2) is equal to the left side of the inequality (1), it can be adjusted as described above. As a result, a value on the left side of the inequality (2) can be adjusted to be greater than a certain value.

[Rubber composition]

A rubber composition constituting a rubber layer of the tread part of the tire relating to the present embodiment will be described below.

The rubber composition comprises a rubber component comprising at least one rubber selected from the group of the consisting of a styrene-butadiene rubber and an isoprene-based rubber, and a copolymer resin comprising styrene and cyclopentadiene as monomer components.

<Rubber component>

The rubber composition relating to the present embodiment may comprise a rubber component other than at least one rubber selected from the group consisting of a styrene-butadiene rubber and an isoprene-based rubber, and examples of such a rubber component include diene-based rubbers, non-diene-based rubbers, and the like. Among them, the diene-based rubbers are preferable, but non-diene-based rubbers can also be compounded to such an extent that does not affect the effects of the present invention.

A content of a diene-based rubber in the rubber component is preferably 90% by mass or more, more preferably 95% by mass or more, further preferably 99% by mass or more. The rubber component can also consist of a diene-based rubber.

As the diene-based rubber, any rubber components can be appropriately used which are commonly used in the tire industry, and examples of the diene-based rubber include, for example, a butadiene rubber (BR), a styrene-isoprene rubber (SIR), a styrene-isoprene-butadiene rubber (SIBR), a chloroprene rubber (CR), an acrylonitrile-butadiene rubber (NBR), and the like. These diene-based rubbers may be used alone, or two or more thereof may be used in combination. Moreover, as the non-diene-based rubber, a rubber component commonly used in the tire industry can be used, examples of which include, for example, a butyl-based rubber, an ethylene propylene rubber, a polynorbornene rubber, a silicone rubber, a polyethylene chloride rubber, a fluororubber (FKM), an acrylic rubber (ACM), a hydrin rubber, and the like. These other rubbers may be used alone, or two or more thereof may be used in combination. Additionally, besides the above-described rubber components, it may or may not comprise a known thermoplastic elastomer.

The rubber component relating to the present embodiment preferably comprises a styrene-butadiene rubber and an isoprene-based rubber. Another preferable aspect of the rubber component relating to the present embodiment is one comprising at least one rubber selected from the group consisting of a styrene-butadiene rubber and an isoprene-based rubber, and a butadiene rubber; preferably one consisting of at least one rubber selected from the group consisting of a styrene-butadiene rubber and an isoprene-based rubber, and a butadiene rubber. Another preferable aspect of the rubber component relating to the present embodiment is one comprising a styrene-butadiene rubber, an isoprene-based rubber, and a butadiene rubber; preferably one consisting of a styrene-butadiene rubber, an isoprene-based rubber, and a butadiene rubber.

(SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include an SBR modified at its terminal and/or main chain; a modified SBR coupled with tin, a silicon compound, etc. (a modified SBR of condensate or having a branched structure, etc.); and the like. These SBRs may be used alone, or two or more thereof may be used in combination.

A styrene content of an SBR is preferably greater than 10% by mass, more preferably greater than 15% by mass, further preferably greater than 25% by mass, from the viewpoint of the effects of the present invention. On the other hand, the styrene content of the SBR is preferably less than 60% by mass, more preferably less than 50% by mass, further preferably less than 45% by mass, from the viewpoints of cross-linking uniformity and suppression of temperature dependency. Besides, in the present specification, the styrene content of the SBR is measured by the above-described measuring method.

A vinyl content of an SBR is preferably greater than 10 mol%, more preferably greater than 15 mol%, further preferably 20 mol% or more. Moreover, the vinyl content of the SBR is preferably less than 70 mol%, more preferably less than 65 mol%, further preferably less than 60 mol%. Besides, in the present specification, the vinyl content of the SBR is measured by the above-described measuring method.

A glass transition temperature (Tg) of an SBR is preferably higher than -80°C, more preferably higher than -75°C, further preferably higher than - 65°C, from the viewpoint of wet grip performance. Moreover, the Tg of the SBR is preferably -40°C or less, more preferably -45°C or less, further preferably - 50°C or less, further preferably -55°C or less, from the viewpoint of fuel efficiency. Besides, in the present specification, the Tg of the SBR is measured by the above-described measuring method.

A weight-average molecular weight (Mw) of an SBR is preferably greater than 200000, more preferably greater than 300000, further preferably greater than 400000. Moreover, Mw is preferably less than 2000000, more preferably less than 1500000, further preferably less than 1000000, from the viewpoint of cross-linking uniformity. Besides, Mw of the SBR is measured by the above-described measuring method.

An oil-extended SBR or a non-oil extended SBR can be used as an SBR. In the present specification, those commercially available from JSR Corporation, Sumitomo Chemical Co., Ltd., UBE Corporation, Asahi Kasei Corporation, ZS Elastomer Co., Ltd., ARLANXEO, etc. can be used as the SBR.

A content of an SBR in the rubber component is preferably greater than 15% by mass, more preferably greater than 25% by mass, further preferably greater than 35% by mass. Moreover, the content of the SBR in the rubber component is preferably less than 80% by mass, more preferably less than 70% by mass, further preferably less than 60% by mass, further preferably less than 50% by mass.

(Isoprene-based rubber)

As an isoprene-based rubber, for example, those common in the tire industry can be used, such as an isoprene rubber (IR), a natural rubber, and the like. Examples of the natural rubber include not only a non-modified natural rubber (NR) but also a modified natural rubber such as an epoxidized natural rubber (ENR), a hydrogenated natural rubber (HNR), a deproteinized natural rubber (DPNR), an ultra pure natural rubber, a grafted natural rubber, and the like. These isoprene-based rubbers may be used alone, or two or more thereof may be used in combination.

The NR is not particularly limited, and those common in the tire industry can be used, examples of which include, for example, SVR-1, SIR20, RSS#3, TSR20, and the like.

A content of an isoprene-based rubber in the rubber component is preferably greater than 15% by mass, more preferably greater than 25% by mass, further preferably greater than 35% by mass. Moreover, the content of the SBR in the rubber component is preferably less than 80% by mass, more preferably less than 70% by mass, further preferably less than 60% by mass, further preferably less than 50% by mass.

(BR)

The BR is not particularly limited, and those common in the tire industry can be used, such as, for example, a BR having a cis content less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (an SPB-containing BR), a modified BR (a high cis modified BR, a low cis modified BR), and the like. Among them, the high-cis BR is preferable. These BRs may be used alone, or two or more thereof may be used in combination.

As the high cis BR, for example, those commercially available form Zeon Corporation, UBE Corporation, JSR Corporation, etc. can be used. When the rubber composition comprises a high cis BR, a low temperature property and abrasion resistance can be improved. A cis content of a high cis BR is preferably greater than 95 mol%, more preferably greater than 96 mol%, further preferably greater than 97 mol%, further preferably 98 mol% or more. Besides, a cis content of a BR is measured by the above-described measuring method.

The rare-earth-based BR is synthesized using a rare-earth element-based catalyst and has a vinyl content of preferably less than 1.8 mol%, more preferably less than 1.6 mol%, further preferably 1.5 mol% or less, and a cis content of preferably greater than 95 mol%, more preferably greater than 96 mol%, further preferably greater than 97 mol%, further preferably 98 mol% or more. As the rare-earth-based BR, for example, those commercially available from LANXESS, etc. can be used.

Examples of the SPB-containing BR include those in which 1,2-syndiotactic polybutadiene crystal is chemically bonded with BR and dispersed, but not those in which the crystal is simply dispersed in the BR. As such a SPB-containing BR, those commercially available from UBE Corporation, etc. can be used.

Examples of the modified BR include BRs modified with the same functional groups as described above for the SBR, and the like, and a modified butadiene rubber (modified BR) modified at its terminal and/or main chain with a functional group comprising at least one element selected from the group consisting of silicon, nitrogen, and oxygen can also be appropriately used.

Examples of other modified BRs include those obtained by adding a tin compound after polymerizing 1,3-butadiene by a lithium initiator, the terminal of the modified BR molecule being further bonded by tin-carbon bond (tin-modified BRs), and the like. Moreover, the modified BR may be either non-hydrogenated or hydrogenated.

A weight-average molecular weight (Mw) of a BR is preferably greater than 200000, more preferably greater than 300000, further preferably greater than 400000, from the viewpoint of abrasion resistance. Moreover, it is preferably less than 2000000, more preferably less than 1000000, further preferably less than 800000, from the viewpoints of cross-linking uniformity, etc. Besides, the Mw can be calculated by the above-described method.

A content of a BR in the rubber component is, but not particularly limited to, preferably greater than 1% by mass, more preferably greater than 5% by mass, further preferably greater than 10% by mass. Moreover, the content of the BR in the rubber component is preferably less than 50% by mass, more preferably less than 30% by mass, further preferably less than 25% by mass.

(Rubber component synthesized from recycle-derived/biomass-derived raw material)

A monomer that is a structural unit of a synthetic rubber such as an SBR, a BR, and the like may be one derived from petroleum or one recycled from a rubber product such as a tire and the like or a non-rubber product such as polystyrene and the like. Examples of monomers obtained by recycle (recycled monomers) include, but not particularly limited to, a recycle-derived butadiene, a recycle-derived aromatic vinyl compound, and the like. Examples of the above-described butadiene include 1,2-butadiene and 1,3-butadiene. Examples of the above-described aromatic vinyl compound include, but not particularly limited to, styrene and the like. Among them, a recycle-derived butadiene (recycled butadiene) and/or a recycle-derived styrene (recycled styrene) are preferably used as raw materials.

A method of producing a recycled monomer is not particularly limited, examples of which include, for example, synthesis of a recycled monomer from recycle-derived naphtha obtained by decomposing a rubber product such as a tire and the like. Moreover, a method of producing a recycle-derived naphtha is not particularly limited and may be performed, for example, by extracting naphtha after decomposing a rubber product such as a tire and the like under high temperature and pressure, or decomposing it by microwaves, or mechanically pulverizing it.

Furthermore, a monomer that is a structural unit of a polymer such as an SBR, a BR, and the like may be one derived from biomass. Examples of the biomass-derived monomer (biomass monomer) include, but not particularly limited to, a biomass-derived butadiene, a biomass-derived aromatic vinyl compound, and the like. Examples of the above-described butadiene include 1, 2-butadiene and 1,3-butadiene. Examples of the above-described aromatic vinyl compound include, but not particularly limited to, styrene and the like. Moreover, a method of producing a biomass monomer is not particularly limited, examples of which include, for example, a method by biological and/or chemical and/or physical conversion of an animal or a plant. A microbial fermentation is representative of biological conversion, and examples of chemical and/or physical conversion include a method using a catalyst, a method using a high heat, a method using a high pressure, a method using an electromagnetic wave, a method using a critical liquid, and combinations thereof. Examples of biomass sources for these monomers include sugar and wood, a plant residue after acquisition of a useful component, a plant-derived ethanol, a biomass naphtha, and the like.

Examples of a polymer synthesized from a biomass monomer component (biomass polymer) include, but not particularly limited to, a polybutadiene rubber synthesized from a biomass-derived butadiene, an aromatic vinyl/butadiene copolymer synthesized from a biomass-derived butadiene and/or a biomass-derived aromatic vinyl, and the like. Examples of the aromatic vinyl/butadiene copolymer include, for example, a styrene-butadiene rubber synthesized from a biomass-derived butadiene and/or a biomass-derived styrene, and the like.

Whether or not a raw material of a polymer is derived from biomass can be determined from percent Modern Carbon (pMC) measured according to ASTM D6866-10. "pMC" means a ratio of $^{14}C$ concentration of a sample to $^{14}C$ concentration of a modern standard carbon (modern standard reference), and this value is used as an index that indicates a biomass ratio of a compound (rubber). A significance of this value will be mentioned below.

In 1 mole of carbon atoms ($6.02 \times 10^{23}$), there are about $6.02 \times 10^{11}$ $^{14}C$ that are about one trillionth of the number of normal carbon atoms. A half-life of $^{14}C$ is 5730 years, and $^{14}C$ regularly decreases. Therefore, in fossil fuels such as coal, petroleum, natural gas, and the like, where it is considered that 226,000 years or more have passed since carbon dioxide in the atmosphere was absorbed by plants to be fixed, all of $^{14}C$ elements, which were contained in them at the beginning of fixation, have decayed. Therefore, in the present 21st century, fossil fuels such as coal, petroleum, natural gas, and the like do not contain any $^{14}C$ element. Accordingly, chemical substances produced using these fossil fuels as raw materials do not contain any $^{14}C$ element as well.

On the other hand, $^{14}C$ is constantly generated by cosmic rays causing nuclear reactions in the atmosphere. Therefore, decrease in $^{14}C$ due to radioactive decay and generation of $^{14}C$ due to nuclear reactions are balanced, and the amount of $^{14}C$ has been constant in the atmosphere environment of the earth. Therefore, the $^{14}C$ concentration of substances derived from biomass resources that have been circulating in the current environment becomes a value of about $1 \times 10^{-12}$ mol% based on the entire carbon atoms, as described above. Accordingly, by utilizing a difference between these values, a ratio (biomass ratio) of a natural resources-derived chemical compound (biomass resources-derived chemical compound) in a certain compound (rubber) can be calculated.

This $^{14}C$ is generally measured as follows. A $^{13}C$ concentration ($^{13}C/^{12}C$) and a $^{14}C$ concentration ($^{14}C/^{12}C$) are measured using an accelerator mass spectrometry based on a tandem accelerator. In the measurements, a $^{14}C$ concentration in a circulating carbon in nature as of 1950 is adopted as the modern standard reference that becomes a reference for the $^{14}C$ concentration. As a specific reference material, an oxalic acid standard provided by NIST (National Institute of Standard and Technology) is used. A specific radioactivity of carbon in this oxalic acid (radioactivity intensity of $^{14}C$ per gram of carbon) is sorted for each carbon isotope, $^{13}C$ is corrected to be a constant value, and a value corrected for attenuation correction from 1950 to the date of measurement is used as a standard $^{14}C$ concentration value (100%). A ratio of this value and a value actually measured for a sample becomes a pMC value.

Thus, if a rubber is produced from a material derived from 100% biomass (natural-based one), the $^{14}C$ concentration shows a value of approximately 110 pMC though there are regional differences and the like (currently, under a normal condition, it is often not equal to 100). On the other hand, if this $^{14}C$ concentration is measured for a chemical substance derived from a fossil fuel such as petroleum and the like, it shows a value of about 0 pMC (for example, 0.3 pMC). This value corresponds to a biomass ratio of 0% as mentioned above.

From above, it is appropriate in terms of environmental protection to use a material such as a rubber having a high pMC value, that is, a material such as a rubber having a high biomass ratio, for a rubber composition.

Besides, in a case where the rubber component consists of three types of an IR-based rubber, an SBR, and a BR, regarding a content of each rubber component, when contents of any two rubbers of these rubbers are determined on the basis of the above-described explanation, a content of the remaining one is naturally determined so that the mass percentage of the entire rubber component becomes 100% by mass.

<Filler>

The rubber composition relating to the present embodiment preferably comprises a filler. Examples of such a filler include silica, carbon black, and the like. Moreover, the filler may comprise another filler other than silica and carbon black. Examples of another filler include, but not particularly limited to, for example, aluminum hydroxide, calcium carbonate, alumina, clay, talc, and the like, which are those conventionally and commonly used in the tire industry. Another filler may be used alone, or two or more thereof may be used in combination.

The filler preferably comprises at least one of silica and carbon black, more preferably comprises silica, and further preferably comprises silica and carbon black. Moreover, the filler may also consist of carbon black and silica.

(Silica)

Silica is not particularly limited, and those common in the tire industry can be used, such as, for example, silica prepared by a dry process (anhydrous silica), silica prepared by a wet process (hydrous silica), and the like. A raw material of silica is not particularly limited and may be, for example, a raw material derived from a mineral such as quartz or a raw material derived from a biological substance such as rice husks (for example, silica made from a biomass material such as rice husks, and the like), or silica recycled from a product containing silica may be used. Among them, hydrous silica prepared by a wet process is preferable for the reason that it has many silanol groups. The silica may be used alone, or two or more thereof may be used in combination.

Silica made from a biomass material can be obtained by, for example, burning rice husks to obtain rice husk ashes, extracting silicate from the rice husk ashes using a sodium hydroxide solution, generating silicon dioxide by reacting the silicate with sulfuric acid in the same manner as a conventional wet silica, and filtering, washing with water, drying and pulverizing precipitates of the silicon dioxide.

As silica recycled from a product comprising silica, silica recovered from such a product as an electronic component like a semiconductor, a tire, a desiccant, a filtering material like diatomaceous earth, or the like can be used. Moreover, a recovering method is not particularly limited, examples of which include pyrolysis, decomposition by electromagnetic waves, and the like. Among them, silica recovered from an electronic component such as a semiconductor and the like or from a tire is preferable.

As a crystallized silica is insoluble in water, silicic acid that is a component thereof cannot be used. By controlling a burning temperature and a burning time, crystallization of silica in rice husk ashes can be suppressed (see JP 2009-2594 A, Akita Prefectural University Web Journal B/2019, vol.6, p.216-222, etc.). As an amorphous silica extracted from rice husks, those commercially available from Wilmar, etc. can be used.

A nitrogen adsorption specific surface area ($N_2SA$) of silica is preferably greater than 100 $m^2/g$, more preferably greater than 120 $m^2/g$, further preferably greater than 140 $m^2/g$, further preferably greater than 160 $m^2/g$, particularly preferably greater than 170 $m^2/g$, from the viewpoint of securement of reinforcing property and grip performance. Moreover, it is preferably less than 350 $m^2/g$, more preferably less than 300 $m^2/g$, further preferably less than 250 $m^2/g$, from the viewpoints of heat generation and processability. Besides, the $N_2SA$ of the silica is measured by the above-described measuring method.

An average primary particle size of silica is preferably greater than 10 nm, more preferably greater than 12 nm, further preferably greater than 14 nm, particularly preferably greater than 16 nm. Moreover, the average primary particle size is preferably less than 24 nm, more preferably less than 22 nm, further preferably less than 20 nm. Besides, the average primary particle size of silica is measured by the above-described measuring method.

A content of silica based on 100 parts by mass of the rubber component is preferably greater than 30 parts by mass, more preferably greater than 40 parts by mass, further preferably greater than 50 parts by mass, from the viewpoint of the effects of the present invention. Moreover, the content of silica based on 100 parts by mass of the rubber component is preferably less than 200 parts by mass, more preferably less than 150 parts by mass, further preferably less than 100 parts by mass, from the viewpoint of processability.

(Silane coupling agent)

The silica is preferably used in combination with a silane coupling agent. The silane coupling agent is not particularly limited, and examples of the silane coupling agent include, for example, a sulfide-based silane coupling agent such as bis(3-triethoxysilylpropyl)disulfide, bis(3-triethoxysilylpropyl)tetrasulfide, and the like; a mercapto-based silane coupling agent such as 3-mercaptopropyltrimethoxysilane, 3-mercaptopropyltriethoxysilane, 2-mercaptoethyltrimethoxysilane, 2-mercaptoethyltriethoxysilane, and the like; a vinyl-based silane coupling agent such as vinyltriethoxysilane, vinyltrimethoxysilane, and the like; an amino-based silane coupling agent such as 3-aminopropyltriethoxysilane, 3-aminopropyltrimethoxysilane, 3-(2-aminoethyl)aminopropyltriethoxysilane, and the like; a glycidoxy-based silane coupling agent such as γ-glycidoxypropyltriethoxysilane, γ-glycidoxypropyltrimethoxysilane, and the like; a nitro-based silane coupling agent such as 3-nitropropyltrimethoxysilane, 3-nitropropyltriethoxysilane, and the like; a chloro-based silane coupling agent such as 3-chloropropyltrimethoxysilane, 3-chloropropyltriethoxysilane, and the like; and the like. Among them, a sulfide-based silane coupling agent and/or a mercapto-based silane coupling agent are preferably compounded in the rubber composition. As the silane coupling agent, for example, those commercially available from Evonik Industries AG, Momentive Performance Materials, etc. can be used. The silane coupling agents may be used alone, or two or more thereof may be used in combination.

A content of a silane coupling agent based on 100 parts by mass of silica is preferably greater than 3 parts by mass, more preferably greater than 5 parts by mass, further preferably greater than 8 parts by mass, from the viewpoint of enhancing dispersibility of silica. Moreover, it is preferably less than 20 parts by mass, more preferably less than 15 parts by mass, further preferably less than 12 parts by mass, from the viewpoints of cost and processability.

(Carbon black)

Examples of carbon black include, but not particularly limited to, N134, N110, N220, N234, N219, N339, N330, N326, N351, N550, N762, and the like. A raw material of carbon black may be a biomass material such as lignin, vegetable oil, and the like or may be pyrolysis oil obtained by pyrolyzing a waste tire. Moreover, a method of producing carbon black may be a method using combustion such as a furnace method, may be a method using hydrothermal carbonization (HTC), or may be a method using pyrolysis of methane by a thermal black method and the like. As a commercially available product, products from ASAHI CARBON CO., LTD., Cabot Japan K.K., TOKAI CARBON CO., LTD., Mitsubishi Chemical Corporation., Lion Corporation., NIPPON STEEL Carbon Co., Ltd., Columbia Carbon Corporation., etc. can be used. The carbon black may be used alone, or two or more thereof may be used in combination.

Moreover, as carbon black other than the above-described carbon black, carbon black made from a biomass material such as lignin and the like, or a recovered carbon black refined by pyrolyzing a product comprising carbon black such as a tire and the like may be used from the viewpoints of a life cycle assessment, etc.

In the present specification, the term "recovered carbon black" refers to a carbon black obtained by pulverizing a product such as a used tire comprising carbon black and the like and baking the pulverized product, in which, when the product is subjected to oxidative combustion by heating in the air, using a thermal weight measurement method according to JIS K 6226-2:2003, a ratio of a mass of ash (ash content), which is a component that does not combust, is 13% by mass or more. That is, a ratio of a mass (carbon amount) of a weight lost content due to the oxidative combustion of the recovered carbon black is 87% by mass or less. The recovered carbon black may also be expressed by rCB.

A recovered carbon black can be obtained from a pyrolysis process of a used pneumatic tire. For example, EP 3427975 A refers to "Rubber Chemistry and Technology", vol. 85, No. 3, pp.408-449 (2012), particularly, pages 438, 440, and 442 and describes that a recovered carbon black can be obtained by pyrolysis of an organic material at 550 to 800°C under an environment in which oxygen is eliminated or by vacuum pyrolysis at a relatively low temperature ([0027]). As described in [0004] of JP 6856781 B, such carbon black obtained by the pyrolysis process usually lacks a functional group on its surface (A Comparison of Surface Morphology and Chemistry of Pyrolytic Carbon Blacks with Commercial Carbon Blacks, Powder Technology 160 (2005) 190-193).

The recovered carbon black may be one that lacks a functional group on its surface or may be one treated so as to include a functional group on its surface. The treatment of the recovered carbon black so that the recovered carbon black includes a functional group on its surface can be performed by a usual method. For example, in EP 3173251 A, carbon black obtained from a pyrolysis process is treated with potassium permanganate under an acidic condition, thereby obtaining carbon black including a hydroxyl group and/or a carboxyl group on its surface. Moreover, in JP 6856781 B, carbon black obtained from a pyrolysis process is treated with an amino acid compound including at least one thiol group or disulfide group, thereby obtaining carbon black whose surface is activated. Examples of the recovered carbon black relating to the present embodiment also include carbon black treated so as to include a functional group on its surface.

As the recovered carbon black, those commercially available from Strebl Green Carbon Pte Ltd., LDC Co., Ltd., etc. can be used.

An average primary particle size of carbon black is preferably 15 nm or more, more preferably 18 nm or more, further preferably 20 nm or more. On the other hand, the average primary particle size is preferably 100 nm or less, more preferably 80 nm or less, further preferably 50 nm or less, from the viewpoint of obtaining reinforcing property. Besides, the average primary particle size of the carbon black is measured by the above-described measuring method.

A nitrogen adsorption specific surface area ($N_2SA$) of carbon black is preferably less than 200 $m^2/g$, more preferably less than 180 $m^2/g$, further preferably less than 150 $m^2/g$, from the viewpoint of the effects of the present invention. Moreover, the $N_2SA$ is preferably greater than 30 $m^2/g$, more preferably greater than 50 $m^2/g$, further preferably greater than 70 $m^2/g$. Besides, the $N_2SA$ of the carbon black is measured by the above-described measuring method.

A content of carbon black based on 100 parts by mass of the rubber component is preferably greater than 3 parts by mass, more preferably greater than 5 parts by mass, further preferably greater than 9 parts by mass, from the viewpoint of reinforcing property. Moreover, it is preferably less than 50 parts by mass, more preferably less than 30 parts by mass, further preferably less than 20 parts by mass, from the viewpoint of the effects of the present invention.

($A_{SIL}/A_{CB}$)

When a content, in parts by mass, of the silica based on 100 parts by mass of the rubber component is referred to as $A_{SIL}$ and a content, in parts by mass, of the carbon black based on 100 parts by mass of the rubber component is referred to as $A_{CB}$, $A_{SIL}/A_{CB}$ is preferably greater than 1.0. $A_{SIL}/A_{CB}$ is more preferably greater than 2.0, further preferably greater than 3.0, further preferably greater than 4.0, further preferably greater than 5.0, further preferably greater than 6.0. On the other hand, an upper limit of $A_{SIL}/A_{CB}$ is not particularly limited, and the rubber composition may not comprise carbon black.

<Copolymer resin>

The rubber composition relating to the present embodiment comprises a copolymer resin that comprises styrene and cyclopentadiene as monomer components (such a copolymer resin is simply referred to as a "copolymer resin" hereinafter).

The copolymer resin is not particularly limited as long as it is a resin comprising cyclopentadiene and styrene as monomer components, and the copolymer resin may be one further comprising another monomer component. Moreover, the copolymer resin may be one obtained by hydrogenating or modifying them.

The above-described "styrene" constituting monomer components may be a compound having a styrene structure other than styrene, and examples of such a compound include, for example, styrene, α-methylstyrene, vinyltoluene, chlorostyrene, and the like . A styrene-based monomer such as vinyltoluene (methylstyrene) and the like is contained, for example, in a C9 fraction. Another monomer component is not particularly limited and is preferably a monomer component commonly used for a petroleum resin, and examples of such another monomer component include, for example, a C9 fraction other than monomers having a styrene structure, and the like. Examples of the C9 fraction other than monomers having a styrene structure include, for example, at least one selected from the group consisting of coumarone, indene, methylindene, and the like.

The copolymer resin is preferably a DCPD-C9 resin that is a copolymer of cyclopentadiene and/or dicyclopentadiene and a C9 fraction. Moreover, the copolymer resin may be one obtained by hydrogenating or modifying the DCPD-C9 resin.

As the copolymer resin comprising styrene and cyclopentadiene as a monomer component, for example, those commercially available from Exxon Mobil Corporation, ENEOS Corporation, Zeon Corporation, Maruzen Petrochemical Co., Ltd., etc. can be used. The copolymer resin may be used alone, or two or more thereof may be used in combination.

A content of a styrene part of a copolymer resin is preferably 0.5% by mass or more, more preferably 0.8% by mass or more, further preferably 1.0% by mass or more, from the viewpoint of the effects of the present invention. Moreover, an upper limit value of the content of the styrene part may be, but not particularly limited to, for example, less than 50% by mass, less than 25% by mass, less than 10% by mass, 5% by mass or less, 3% by mass or less, or 2% by mass or less.

A softening point of a copolymer resin is preferably higher than 70°C, more preferably higher than 80°C, further preferably higher than 90°C, particularly preferably higher than 100°C, from the viewpoint of the effects of the present invention. Moreover, it is preferably lower than 150°C, more preferably lower than 140°C, further preferably lower than 130°C, from the viewpoints of processability and improvement in dispersibility of a filler in a rubber component. The softening point of the resin is measured by the above-described measuring method.

A content of a copolymer resin based on 100 parts by mass of the rubber component (a total amount of two or more copolymer resins when compounded in the rubber composition) is preferably greater than 3 parts by mass, more preferably greater than 5 parts by mass, further preferably 10 parts by mass or more. On the other hand, the content is preferably less than 80 parts by mass, more preferably less than 60 parts by mass, further preferably less than 40 parts by mass, from the viewpoint of suppression of heat generation.

<Total styrene amount St>

Although the total styrene amount St, in % by mass, is not particularly limited in the present embodiment as long as it satisfies the above-described inequalities (1) and (2), usually, St is preferably 0.2% by mass or more, more preferably 2.0% by mass or more, further preferably 4.0% by mass or more, further preferably 5.0% by mass or more. On the other hand, St is preferably 25.0% by mass or less, more preferably 20.0% by mass or less, further preferably 15.0% by mass or less.

<Other compounding agents>

The rubber composition relating to the present embodiment can appropriately comprise compounding agents conventionally and commonly used in the tire industry, for example, a softening agent, processing aid, a vulcanized rubber particle, wax, stearic acid, zinc oxide, an antioxidant, a vulcanizing agent, a vulcanization accelerator, and the like, in addition to the above-described components.

(Softening agent)

The softening agent is as described above, specific examples of which include resin, oil, a liquid polymer, an ester-based plasticizing agent, and the like. These softening agents may be ones derived from petroleum, ones derived from biomass, or ones derived from naphtha recycled from a rubber product or non-rubber product. Moreover, low-molecular-weight hydrocarbon components obtained by pyrolyzing used tires or products containing various components and performing extraction from the pyrolysate may be used as softening agents. The softening agent may be used alone, or two or more thereof may be used in combination.

<<Resin>>

The rubber composition relating to the present embodiment may comprise another resin other than the above-described copolymer resin. Another resin is not particularly limited, and any resin commonly used in the tire industry can be used, examples of which include, for example, an aromatic vinyl-based resin, a dicyclopentadiene-based resin, a C9-based resin, a C5-based resin, a C5/C9-based resin, a terpene-based resin, a rosin-based resin, a phenol-based resin, and the like. Another resin may be used alone, or two or more thereof may be used in combination.

Aromatic vinyl-based resin

In the present specification, an "aromatic vinyl-based resin" refers to a resin comprising at least one aromatic vinyl compound selected from the group consisting of styrene, $\alpha$-methylstyrene, vinyltoluene, p-chlorostyrene, and the like as a monomer component. As the aromatic vinyl-based resin, a homopolymer of $\alpha$-methylstyrene or styrene or a copolymer of $\alpha$-methylstyrene and styrene is preferable, and a copolymer of $\alpha$-methylstyrene and styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used. The aromatic vinyl-base resin may be used alone, or two or more thereof may be used in combination.

Dicyclopentadiene-based resin

In the present specification, a "dicyclopentadiene-based resin" refers to a resin comprising dicyclopentadiene as a monomer component. As the dicyclopentadiene-based resin, for example, those commercially available from Exxon Mobil Corporation, ENEOS Corporation, Zeon Corporation, Maruzen Petrochemical Co., Ltd., etc. can be used. The dicyclopentadiene-based resin may be used alone, or two or more thereof may be used in combination.

C9-based resin

In the present specification, a "C9-based resin" refers to a resin obtained by polymerizing C9 fractions, and may be one obtained by polymerizing a C9 fraction alone or a copolymer obtained by copolymerizing a C9 fraction with other components. Examples of the C9 fraction include, for example, at least one petroleum fraction selected from the group consisting of alkylstyrene such as vinyltoluene and the like, coumarone, indene, methylindene, and the like; and having 8 to 10 carbon atoms. Specific examples of the C9-based resin include, for example, a coumarone-indene resin, a coumarone resin, an indene resin, and the like. The C9-based resin may be used alone, or two or more thereof may be used in combination.

C5-based resin

In the present specification, a "C5-based resin" refers to a resin obtained by polymerizing C5 fractions other than cyclopentadiene and may be one obtained by hydrogenating or modifying them. Examples of the C5 fractions other than cyclopentadiene include, for example, at least one petroleum fraction selected from the group consisting of isoprene, pentane, isopentane, neopentane, pentene, pentadiene, and the like; and having 4 to 5 carbon atoms. The C5-based resin may be used alone, or two or more thereof may be used in combination.

C5/C9-based resin

A "C5/C9-based resin" refers to a resin obtained by copolymerizing the C5 fraction and the C9 fraction and may be one obtained by hydrogenating or modifying them. As the C5/C9-based petroleum resin, for example, those commercially available from Tosoh Corporation, Zibo Luhua Hongjin New Material Group Co., Ltd, etc. can be appropriately used. The C5/C9-based resin may be used alone, or two or more thereof may be used in combination.

Terpene-based resin

A terpene-based resin refers to a resin comprising at least one terpene compound selected from the group consisting of $\alpha$-pinene, $\beta$-pinene, limonene, dipentene, and the like as a monomer component having the largest content, the resin preferably comprising 50 mol% or more of such a terpene compound, and may be one obtained by hydrogenating or modifying them. Specific examples of the terpene-based resin include, for example, a polyterpene resin comprising only one or more of the terpene compounds as monomer components, an aromatic-modified terpene resin comprising the terpene compound and an aromatic compound as monomer components, a terpene phenolic resin comprising the terpene compound and a phenol-based compound as monomer components, and the like. Examples of the aromatic compound used as a monomer component for the aromatic-modified terpene resin include, for example, at least one selected form the group consisting of styrene, $\alpha$-methylstyrene, vinyltoluene, divinyltoluene, and the like. Examples of the phenol-based compound used as a monomer component for the terpene phenolic resin include, for example, at least one selected form the group consisting of phenol, bisphenol A, cresol, xylenol, and the like. The terpene-based resin may be used alone, or two or more thereof may be used in combination.

Rosin-based resin

A rosin-based resin refers to a resin comprising at least one rosin acid compound selected from the group consisting of abietic acid, neoabietic acid, palustric acid, isopimaric acid, and the like, and may be one obtained by hydrogenating or modifying them. Example of the rosin-based resin include, but not particularly limited to, for example, a natural resin rosin and a rosin-modified resin obtained by modifying the natural resin rosin by hydrogenation, disproportionation, dimerization, esterification, etc., and the like. The rosin-based resin may be used alone, or two or more thereof may be used in combination.

Phenol-based resin

A phenol-based resin refers to a resin comprising a phenolic compound such as phenol, cresol, and the like as a monomer component having the largest content, the resin preferably comprising 50 mol% or more of such a phenolic compound. Examples of the phenol-based resin include, but not particularly limited to, a phenol formaldehyde resin, an alkylphenol formaldehyde resin, an alkylphenol acetylene resin, an oil-modified phenol formaldehyde resin, and the like. The phenol-based resin may be used alone, or two or more thereof may be used in combination.

<<Softening point>>

A softening point of another resin is preferably higher than 80°C, more preferably higher than 90°C, further preferably higher than 100°C, from the viewpoint of wet grip performance. Moreover, it is preferably less than 150°C, more preferably less than 140°C, further preferably less than 130°C, from the viewpoints of processability and improvement in dispersibility of a filler in a rubber component. The softening point of another resin is measured by the above-described measuring method.

<<Content>>

A content of another resin based on 100 parts by mass of the rubber component (a total amount of two or more types of another resin when compounded in the rubber composition) is preferably greater than 10 parts by mass, more preferably greater than 15 parts by mass, further preferably 20 parts by mass or more. On the other hand, the content is preferably less than 80 parts by mass, more preferably less than 60 parts by mass, further preferably less than 40 parts by mass, further preferably less than 20 parts by mass, from the viewpoint of suppression of heat generation, or the rubber composition may not comprise another resin.

«Oil»

Examples of oil include, for example, mineral oils, vegetable oils, animal oils, and the like. Examples of mineral oil include paraffinic mineral oils (mineral oils), naphthenic mineral oils, aromatic mineral oils, and the like. Specific examples of the mineral oils include, for example, MES (Mild Extracted Solvate), DAE (Distillate Aromatic Extract), TDAE (Treated Distillate Aromatic Extract), TRAE (Treated Residual Aromatic Extract), RAE (Residual Aromatic Extract), and the like. Moreover, as an environmental measure, mineral oils each having a low content of a polycyclic aromatic compound (PCA) can also be used. Examples of the mineral oils each having a low content of a PCA include MES, TDAE, heavy naphthenic oil, and the like. Moreover, from the viewpoint of a life cycle assessment, one obtained by refining a waste oil after use for a rubber mixing machine or an engine or waste cooking oil used in a cooking facility may also be used. The oil may be used alone, or two or more thereof may be used in combination.

Examples of the vegetable oils include, for example, a linseed oil, a rapeseed oil, a safflower oil, a soybean oil, a corn oil, a cottonseed oil, a rice bran oil, a tall oil, a sesame oil, perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oils also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oils, a waste cooking oil obtained by recovering what was utilized as an edible oil, etc., and the like. Besides, the vegetable oil may be liquid or solid at normal temperature (25°C).

The vegetable oil preferably comprises acylglycerol, and more preferably comprises triacylglycerol. Besides, in the present specification, acylglycerol refers to a compound in which a hydroxy group of glycerin and a fatty acid are ester-bonded. The acylglycerol is not particularly limited and may be 1-monoacylglycerol, 2-monoacylglycerol, 1,2-diacylglycerol, 1,3-diacylglycerol, or triacylglycerol. Furthermore, the acylglycerol may be a monomer, a dimer, or a multimer that is a trimer or higher. Besides, acylglycerol that is a dimer or higher can be obtained by thermal polymerization, oxidative polymerization, or the like. Moreover, the acylglycerol may be liquid or solid at normal temperature (25°C).

Whether the rubber composition comprises the above-described acylglycerol can be confirmed by, but not particularly limited to, $^1$H-NMR measurement. For example, a heavy chloroform in which a rubber composition containing triacylglycerol is immersed at normal temperature (25°C) for 24 hours and then removed is subjected to $^1$H-NMR measurement at room temperature, and signals near 5.26 ppm, near 4.28 ppm, and near 4.15 ppm are observed under a condition that a signal of tetramethylsilane (TMS) is set to 0.00 ppm. These signals are presumed to be derived from hydrogen atoms bonded to carbon atoms adjacent to oxygen atoms of the ester group. Besides, "near" in this paragraph shall be a range of $\pm 0.10$ ppm.

The above-described fatty acid is not particularly limited and may be an unsaturated fatty acid or a saturated fatty acid. Examples of the unsaturated fatty acid include monounsaturated fatty acids such as oleic acid and the like; and polyunsaturated fatty acids such as linoleic acid, linolenic acid, and the like. Moreover, examples of the saturated fatty acid include butyric acid, lauric acid, and the like.

Among them, as the above-described fatty acid, a fatty acid having few double bonds, that is, a saturated fatty acid or a monounsaturated fatty acid is desired, and oleic acid is preferable. As a vegetable oil comprising such fatty acid, for example, a vegetable oil comprising a saturated fatty acid or a monounsaturated fatty acid or a vegetable oil refined by transesterification or the like may be used. Moreover, in order to produce a vegetable oil comprising such fatty acid, a plant may be improved by selective breeding, gene recombination, genome editing, or the like.

As a vegetable oil, for example, those commercially available from Idemitsu Kosan Co., Ltd., Sankyo Yuka Kogyo K. K., ENEOS Corporation, Olisoy, H&R Group, HOKOKU Corporation, Fuji Kosan Co., Ltd., The Nisshin Oillio Group, etc. can be used.

Examples of the animal oils include fish oils, beef tallow, whale oils oleyl alcohol derived therefrom, and the like.

A content of oil when compounded based on 100 parts by mass of the rubber component is preferably 8 parts by mass or more, more preferably 10 parts by mass or more, further preferably 20 parts by mass or more, from the viewpoint of processability. Moreover, it is preferably 80 parts by mass or less, more preferably 60 parts by mass or less, further preferably 40 parts by mass or less, from the viewpoint of abrasion resistance. The content of the oil also includes an amount of oil contained in an oil-extended rubber.

<<Liquid rubber>>

The liquid rubber is not particularly limited as long as it is a polymer in a liquid state at normal temperature (25°C), examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. The liquid rubber may be used alone, or two or more thereof may be used in combination.

A content of a liquid rubber when compounded based on 100 parts by mass of the rubber component is preferably 1 part by mass or more, more preferably 3 parts by mass or more, further preferably 5 parts by mass or more. Moreover, the content of the liquid rubber is preferably 50 parts by mass or less, more preferably 30 parts by mass or less, further preferably 10 parts by mass or less. The content of the liquid rubber also includes an amount of an extending liquid rubber used for extending a rubber component.

<< Ester-based plasticizing agent >>

Examples of the ester-based plasticizing agent include, for example, dibutyl adipate (DBA), diisobutyl adipate (DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizing agents may be used alone, or two or more thereof may be used in combination.

A content of an ester-based plasticizing agent when compounded based on 100 parts by mass of the rubber component is preferably 1 part by mass or more, more preferably 3 parts by mass or more, further preferably 5 parts by mass or more. Moreover, the content of the ester-based plasticizing agent is preferably 50 parts by mass or less, more preferably 30 parts by mass or less, further preferably 10 parts by mass or less. The content of the ester-based plasticizing agent also includes an amount of an extending ester-based plasticizing agent used for extending a rubber component.

(Vulcanized rubber particle)

The vulcanized rubber particle is a particle made of a vulcanized rubber. Specifically, a rubber powder specified in JIS K6316:2017, and the like can be used. A recycled rubber powder produced from a pulverized product of a waste tire and the like is preferable from the viewpoints of consideration for environment and cost. The vulcanized rubber particle may be used alone, or two or more thereof may be used in combination.

The vulcanized rubber particle is not particularly limited and may be a non-modified vulcanized rubber particle or a modified vulcanized rubber particle. As a commercially available product of a vulcanized rubber, for example, products manufactured by Lehigh Technologies, Muraoka Rubber Reclaiming Co., Ltd. etc. can be used.

A content of the vulcanized rubber particle when compounded based on 100 parts by mass of the rubber component can be appropriately adjusted, for example, within a range of greater than 1 part by mass and less than 80 parts by mass.

(Stearic acid)

A content of stearic acid when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of vulcanization rate.

(Zinc oxide)

A content of zinc oxide when compounded based on 100 parts by mass of the rubber component is preferably 0.5 parts by mass or more, more preferably 1.0 parts by mass or more, further preferably 1.5 part by mass or more, from the viewpoint of processability. Moreover, it is preferably 5.0 parts by mass or less, more preferably 4.5 parts by mass or less, further preferably 4.0 parts by mass or less, from the viewpoint of abrasion resistance.

(Wax)

Wax is not particularly limited, and any of those commonly used in the tire industry can be appropriately used. Examples of the wax include, for example, a petroleum-based wax, a mineral-based wax, a synthetic wax, a plant-derived wax, and the like. Among them, the petroleum-based wax and the plant-derived wax are preferable, and the petroleum-based wax is more preferable. Examples of the plant-derived wax include, for example, a rice bran wax, a carnauba wax, a candelilla wax, and the like. Examples of the petroleum-based wax include, for example, a paraffin wax, a microcrystalline wax, a specially selected wax thereof, and the like, and the paraffin wax is preferable. Besides, the wax relating to the present embodiment shall not include stearic acid. As wax, for example, those commercially available from Ouchi Shinko Chemical Industry Co., Nippon Seiro Co., Ltd., PARAMELT, etc. can be used. Wax may be used alone, or two or more thereof may be used in combination.

A content of wax when compounded based on 100 parts by mass of the rubber component is preferably 0.5 parts by mass or more, more preferably 1 part by mass or more, from the viewpoint of weather resistance of a rubber. Moreover, it is preferably 10 parts by mass or less, more preferably 5 parts by mass or less, from the viewpoint of prevention of whitening of a tire due to bloom.

(Antioxidant)

Examples of the antioxidant include, but not particularly limited to, a naphthylamine-based antioxidant such as phenyl-$\alpha$-naphthylamine and the like; a diphenylamine-based antioxidant such as octylated diphenylamine, 4,4'-bis($\alpha$,$\alpha$'-dimethylbenzyl)diphenylamine, and the like; a p-phenylenediamine-based antioxidant such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), N,N'-di-2-naphthyl-p-phenylenediamine (DNPD), and the like; a quinoline-based antioxidant such as a polymer of 2,2,4-trimethyl-1,2-dihydroquinoline and the like; a monophenol-based antioxidant such as 2,6-di-t-butyl-4-methylphenol, styrenated phenol, and the like; bisphenol-based, trisphenol-based, and polyphenol-based antioxidants such as tetrakis-[methylene-3-(3',5'-di-t-butyl-4'-hydroxyphenyl) propionate]methane and the like; and the like. Among them, the p-phenylenediamine-based antioxidant and the quinoline-based antioxidant are preferable, and N-(1,3-dimethylbutyl)-N'-phenyl-p-phenylenediamine and a polymer of 2,2,4-trimethyl-1,2-dihydroquinoline are more preferable. As the commercially-available product, for example, products manufactured by Seiko Chemical Co., Ltd., Sumitomo Chemical Co., Ouchi Shinko Chemical Industry Co., Flexsys, etc. can be used. The antioxidant may be used alone, or two or more thereof may be used in combination.

A content of an antioxidant when compounded based on 100 parts by mass of the rubber component is preferably 0.5 parts by mass or more, more preferably 1 part by mass or more, from the viewpoint of ozone crack resistance of a rubber. Moreover, it is preferably 10 parts by mass or less, more preferably 5 parts by mass or less, from the viewpoints of abrasion resistance and wet grip performance.

(Processing aid)

Examples of processing aid include, for example, a fatty acid metal salt, a fatty acid amide, an amide ester, a silica surfactant, a fatty acid ester, a mixture of a fatty acid metal salt and an amide ester, a mixture of a fatty acid metal salt and a fatty acid amide, and the like. As processing aid, for example, those commercially available from Schill+Seilacher GmbH, Performance Additives, etc. can be used. The processing aid may be used alone, or two or more thereof may be used in combination.

A content of processing aid when compounded based on 100 parts by mass of the rubber component is preferably 0.5 parts by mass or more, more preferably 1 part by mass or more, from the viewpoint of exhibiting an effect of improving processability. Moreover, it is preferably 10 parts by mass or less, more preferably 8 parts by mass or less, further preferably 5 parts by mass or less, from the viewpoints of abrasion resistance and breaking strength.

(Vulcanizing agent)

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used. The vulcanizing agent can be used alone, or two or more thereof can be used in combination.

A content of sulfur when compounded as a vulcanizing agent based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, from the viewpoint of prevention of deterioration. Besides, a content of a vulcanizing agent when an oil-containing sulfur is used as the vulcanizing agent is defined as a total content of pure sulfur contained in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

(Vulcanization accelerator)

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators. Among them, the sulfenamide-based vulcanization accelerator, the thiazole-based vulcanization accelerator, and the guanidine-based vulcanization accelerator are preferable. The vulcanization accelerator may be used alone, or two or more thereof may be used in combination.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Among them, N-cyclohexyl-2-benzothiazolyl sulfenamide (CBS) is preferable.

Examples of the thiazole-based vulcanization accelerator include, for example, 2-mercaptobenzothiazole, a cyclohexylamine salt of 2-mercaptobenzothiazole, di-2-benzothiazolyl disulfide, and the like. Among them, 2-mercaptobenzothiazole is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

A content of a vulcanization accelerator when compounded based on 100 parts by mass of the rubber component is preferably 1 part by mass or more, more preferably 1.5 parts by mass or more. Moreover, the content of the vulcanization accelerator based on 100 parts by mass of the rubber component is preferably 8 parts by mass or less, more preferably 7 parts by mass or less, further preferably 6 parts by mass or less. When the content of the vulcanization accelerator is within the above-described ranges, breaking strength and elongation tend to be secured.

<Various materials comprising carbon atoms>

In the present specification, various materials each having a carbon atom (for example, a rubber, oil, resin, a vulcanization accelerator, an antioxidant, a surfactant, and the like) may be derived from carbon dioxide in the atmosphere. These various materials can be obtained by converting carbon dioxide directly or converting methane obtained via a process of methanation by which methane is synthesized from carbon dioxide.

[Production method]

The rubber composition can be produced by a known method. For example, it can be produced by kneading the above-described components with a rubber kneading machine such as an open roll, a sealed type kneader (a Banbury mixer, a kneader, and the like), and the like.

The kneading step includes, for example, a base kneading step of kneading compounding agents and additives other than a vulcanizing agent and a vulcanization accelerator; and a final kneading (F-kneading) step of adding the vulcanizing agent and the vulcanization accelerator to the kneaded product obtained in the base kneading step and kneading them. Additionally, the base kneading step can also be divided into multiple steps as necessary.

Examples of kneading conditions include, but not particularly limited to, for example, a method of kneading at a discharge temperature of 150°C to 170°C for 3 to 10 minutes in the base kneading step and kneading at 70°C to 110°C for 1 to 5 minutes in the final kneading step.

The tire relating to the present embodiment can be produced using the above-described rubber composition by a usual method. That is, the tire can be produced by extruding unvulcanized rubber compositions into a shape of a rubber layer of a tread part with an extruder equipped with a mouthpiece having a predetermined shape, attaching the extruded unvulcanized tread together with other tire members on a tire forming machine while making an adjustment so that it has a predetermined tire structure, to form an unvulcanized tire by a usual molding method, followed by heating and pressurizing this unvulcanized tire in a vulcanizing machine. Examples of the vulcanization condition include, but not particularly limited to, for example, a method of vulcanizing at 140°C to 170°C for 10 to 40 minutes.

[Application]

In the present specification, the tire can be used for any application, regardless of whether the tire is a pneumatic tire or a non-pneumatic tire and can be used as a tire for a passenger car, a tire for a large passenger car, a tire for a large SUV, a racing tire, a motorcycle tire, a heavy-duty tire, or a run-flat tire. Besides, the tire for a passenger car refers to a tire that is presupposed to be mounted to a vehicle running with four wheels and that has a maximum load capacity of less than 1400 kg. The heavy-duty tire refers to a tire having a maximum load capacity of 1400 kg or more. Moreover, in the present specification, the tire can be used as an all-season tire and a summer tire, as well as a winter tire such as a studless tire.

EXAMPLE

Hereinafter, examples considered to be preferable in implementing the present invention (Examples) will be described, though the scope of the present invention is not limited to only these Examples. Results, which are calculated based on evaluation methods described below considering a tire having a rubber layer of a tread part and a tire structure that are obtained in accordance with each Tables using various chemicals described below, are shown in the lower part of each Table.

[Various chemicals]

Various chemicals used in Examples and Comparative examples are collectively shown below.

NR: SVR-L
SBR: TUFDENE 3830 (S-SBR manufactured by Asahi Kasei Corporation, styrene content: 33% by mass, comprising 37.5 parts by mass of an oil content based on 100 parts by mass of a rubber solid content)
BR: BR150 manufactured by UBE Elastomer Co. Ltd. (Butadiene rubber, cis content: 98 mol%, vinyl content: 1 mol%)
CB (carbon black): DIABLACK I manufactured by Mitsubishi Chemical Corporation (N220, $N_2SA$: 114 $m^2/g$, average primary particle size: 22 nm)
Silica: Ultrasil VN3 manufactured by Evonik Industries AG ($N_2SA$: 175 $m^2/g$, average primary particle size: 18 nm)
Coupling agent (silane coupling agent): Si266 manufactured by Evonik Industries AG (bis(3-triethoxysilylpropyl) disulfide)
Oil: Diana process NH-70S manufactured by Idemitsu Kosan Co., Ltd.
Resin 1: SYLVATARAXX 4150 manufactured by Kraton Corporation (polyterpene resin, Mw: 2500, softening point: 115°C)
Resin 2: Oppera PR383 manufactured by Exxon Mobil Chemical (hydrogenated DCPD-C9 resin, comprising styrene and cyclopentadiene as monomer components, Mw: 770, softening point: 103°C, styrene content: 1.78% by mass)
Zinc oxide: Zinc oxide No. 1 manufactured by Mitsui Mining & Smelting Co., Ltd.
Antioxidant 1: Nocrac 6C (6PPD) manufactured by Ouchi Shinko Chemical Industry Co., Ltd. (N-(1,3-dimethylbutyl)-N'-phenyl-p-phenylenediamine)

Antioxidant 2: Nocrac RD manufactured by Ouchi Shinko Chemical Industry Co., Ltd. (poly(2,2,4-trimethyl-1,2-dihydroquinoline))

Stearic acid: Bead stearic acid "CAMELLIA" manufactured by NOF CORPORATION

Wax: OZOACE 0355 manufactured by Nippon Seiro Co., Ltd. (paraffin wax)

Sulfur: HK-200-5 manufactured by Hosoi Chemical Industry Co., Ltd. (5% oil-containing powdered sulfur)

Vulcanization accelerator 1: Nocceler D manufactured by Ouchi Shinko Chemical Industry Co., Ltd. (1,3-diphenylguanidine (DPG))

Vulcanization accelerator 2: Nocceler CZ manufactured by Ouchi Shinko Chemical Industry Co., Ltd. (N-cyclohexyl-2-benzothiazolylsulfenamide (CBS))

[Examples and Comparative examples]

A tire is produced according to a tire structure and a compounding formulation shown in each Table. First, using a 1.7 L closed Banbury mixer, chemicals other than sulfur and vulcanization accelerators are kneaded for 1 to 10 minutes until a temperature reaches a discharge temperature at 150 to 160°C to obtain a kneaded product. Next, using a twin-screw open roll, the sulfur and vulcanization accelerators are added to the obtained kneaded product, and the mixture is kneaded for 4 minutes until the temperature reaches 105°C to obtain an unvulcanized rubber composition. The obtained unvulcanized rubber composition is molded into a shape of a cap tread with an extruder equipped with a mouthpiece having a predetermined shape, the cap tread is attached together with other tire members to prepare an unvulcanized tire. The obtained unvulcanized tire is press-vulcanized under a condition at 150°C for 35 minutes, thereby producing each test tire. Besides, the tread part shall be composed of a cap tread and a base tread, the cap tread shall have a thickness of 6 mm, and the base tread shall have a thickness of 4 mm.

[Evaluation]

Results measured by a method described below for each test tire are described in the corresponding columns in Table described below. Unless otherwise specified, each test tire is used after made into a standardized state.

<Wet grip performance after long-term use>

Each test tire is mounted on each of four wheels of an FF passenger vehicle with a displacement of 2000 cc, and the vehicle is made to run 10000 km on an off-road. Afterward, a braking distance from a point at which the vehicle running at a speed of 100 km/h on a wet asphalt road surface is braked is measured. Wet grip performance of each tire is indicated as an index by the following equation with a braking distance of a test tire of the reference Comparative example (Comparative example 2) being as 100. The results show that the higher the index is, the more excellent the wet grip performance is.

(Wet grip performance index) = (braking distance of tire of reference Comparative example) / (braking distance of each test tire) $\times$ 100.

Table 1

|  | Example | | | Comparative example | | | | |
| --- | --- | --- | --- | --- | --- | --- | --- | --- |
|  | 1 | 2 | 3 | 1 | 2 | 3 | 4 | 5 |
| Structure |  |  |  |  |  |  |  |  |
| Tire weight (kg) [G] | 7.80 | 7.45 | 7.25 | 7.45 | 7.80 | 7.80 | 7.45 | 7.25 |
| Maximum load capacity (kg) [$W_L$] | 540 | 540 | 540 | 540 | 540 | 540 | 540 | 540 |
| Compounding amount (parts by mass) |  |  |  |  |  |  |  |  |
| NR | 40 | 40 | 40 | 40 | 40 | 80 | 80 | 80 |
| SBR | 55 | 55 | 55 | 55 | 55 | - | - | - |
| BR | 20 | 20 | 20 | 20 | 20 | 20 | 20 | 20 |
| (Extending oil) | (15) | (15) | (15) | (15) | (15) | (0) | (0) | (0) |

(continued)

| Compounding amount (parts by mass) | | | | | | | | |
|---|---|---|---|---|---|---|---|---|
| CB | 10 | 10 | 10 | 10 | 10 | 10 | 10 | 10 |
| Silica | 65 | 65 | 65 | 65 | 65 | 65 | 65 | 65 |
| Coupling agent | 5.6 | 5.6 | 5.6 | 5.6 | 5.6 | 5.6 | 5.6 | 5.6 |
| Oil | 5 | 5 | 5 | 5 | 5 | 20 | 20 | 20 |
| Resin 1 | - | - | - | 10 | 10 | 10 | 10 | 10 |
| Resin 2 | 10 | 10 | 10 | - | - | - | - | - |
| Zinc oxide | 2 | 2 | 2 | 2 | 2 | 2 | 2 | 2 |
| Antioxidant 1 | 2 | 2 | 2 | 2 | 2 | 2 | 2 | 2 |
| Antioxidant 2 | 2 | 2 | 2 | 2 | 2 | 2 | 2 | 2 |
| Stearic acid | 2 | 2 | 2 | 2 | 2 | 2 | 2 | 2 |
| Wax | 1 | 1 | 1 | 1 | 1 | 1 | 1 | 1 |
| Sulfur | 1.5 | 1.5 | 1.5 | 1.5 | 1.5 | 1.5 | 1.5 | 1.5 |
| Vulcanization accelerator 1 | 2.3 | 2.3 | 2.3 | 2.3 | 2.3 | 2.3 | 2.3 | 2.3 |
| Vulcanization accelerator 2 | 2.3 | 2.3 | 2.3 | 2.3 | 2.3 | 2.3 | 2.3 | 2.3 |
| Total styrene amount (% by mass) [St] | 13.4 | 13.4 | 13.4 | 13.2 | 13.2 | 0.0 | 0.0 | 0.0 |
| Inequality (1) $G/W_L$ | 0.0144 | 0.0138 | 0.0134 | 0.0138 | 0.0144 | 0.0144 | 0.0138 | 0.0134 |
| Inequality (2) $St/(G/W_L)$ | 926 | 970 | 996 | 957 | 914 | 0 | 0 | 0 |
| $A_{SIL}/AC_{CB}$ | 6.5 | 6.5 | 6.5 | 6.5 | 6.5 | 6.5 | 6.5 | 6.5 |
| Wet grip performance index after long-term use | 108 | 113 | 117 | 100 | 96 | 83 | 88 | 92 |

[Embodiments]

Examples of embodiments of the present invention are described below.

[1] A tire comprising a tread part,
wherein a rubber layer of the tread part is composed of a rubber composition comprising:

a rubber component comprising at least one rubber selected from the group consisting of a styrene-butadiene rubber and an isoprene-based rubber; and
a copolymer resin comprising styrene and cyclopentadiene as monomer components; and
wherein $W_L$, G, and St satisfy the following inequalities (1) and (2), the right side of the inequality (1) is preferably 0.0144, more preferably 0.0142, and the right side of the inequality (2) is preferably 10, more preferably 20, further preferably 30, further preferably 100, further preferably 900, further preferably 920, further preferably 950, further preferably 990, further preferably 1100, further preferably 1200,

$$(1)\ G/W_L < 0.0145$$

$$(2)\ St/(G/W_L) > 8$$

where $W_L$ represents a maximum load capacity, in kg, of the tire, G represents a weight, in kg, of the tire, and St represents a total styrene amount, in % by mass, in the rubber composition based on 100% by mass of the rubber component.

[2] The tire of [1] above, wherein the right side of the inequality (1) is 0.140, preferably 0.139, more preferably 0.137, further preferably 0.136.
[3] The tire of [1] above, wherein the right side of the inequality (1) is 0.135.
[4] The tire of any one of [1] to [3] above, wherein the rubber component comprises a butadiene rubber.

[5] The tire of any one of [1] to [3] above, wherein the rubber component comprises a butadiene rubber, a styrene-butadiene rubber, and an isoprene-based rubber.

[6] The tire of any one of [1] to [5] above, wherein the rubber composition comprises silica.

[7] The tire of any one of [1] to [5] above,

wherein the rubber composition comprises silica and carbon black and

wherein $A_{SIL}/A_{CB}$ is greater than 1.0, preferably greater than 2.0, more preferably greater than 3.0, further preferably greater than 4.0, further preferably greater than 5.0, further preferably greater than 6.0, where $A_{SIL}$ represents a content, in parts by mass, of the silica based on 100 parts by mass of the rubber component and $A_{CB}$ represents a content, in parts by mass, of the carbon black based on 100 parts by mass of the rubber component.

[8] The tire of any one of [1] to [7] above, wherein the copolymer resin is a DCPD-C9 resin.

REFERENCE SIGNS LIST

Wt.    Tire cross-sectional width
Ht.    Tire cross-sectional height
Dt.    Tire outer diameter

**Claims**

1. A tire comprising a tread part,
   wherein a rubber layer of the tread part is composed of a rubber composition comprising:

   a rubber component comprising at least one rubber selected from the group consisting of a styrene-butadiene rubber and an isoprene-based rubber; and
   a copolymer resin comprising styrene and cyclopentadiene as monomer components; and
   wherein $W_L$, G, and St satisfy the following inequalities (1) and (2),

   $$(1)\ G/W_L < 0.0145$$

   $$(2)\ St/(G/W_L) > 8$$

   where $W_L$ represents a maximum load capacity, in kg, of the tire, G represents a weight, in kg, of the tire, and St represents a total styrene amount, in % by mass, in the rubber composition based on 100% by mass of the rubber component.

2. The tire of claim 1, wherein the right side of the inequality (1) is 0.140.

3. The tire of claim 1, wherein the right side of the inequality (1) is 0.135.

4. The tire of any one of claims 1 to 3, wherein the rubber component comprises a butadiene rubber.

5. The tire of any one of claims 1 to 3, wherein the rubber component comprises a butadiene rubber, a styrene-butadiene rubber, and an isoprene-based rubber.

6. The tire of any one of claims 1 to 5, wherein the rubber composition comprises silica.

7. The tire of any one of claims 1 to 5,

   wherein the rubber composition comprises silica and carbon black and
   wherein $A_{SIL}/A_{CB}$ is greater than 1.0, where $A_{SIL}$ represents a content, in parts by mass, of the silica based on 100 parts by mass of the rubber component and $A_{CB}$ represents a content, in parts by mass, of the carbon black based on 100 parts by mass of the rubber component.

8. The tire of any one of claims 1 to 7, wherein the copolymer resin is a DCPD-C9 resin.

# FIG. 1

# EUROPEAN SEARCH REPORT

Europäisches Patentamt
European Patent Office
Office européen des brevets

**Application Number**

EP 24 21 7393

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 201 705 A1 (SUMITOMO RUBBER IND [JP]) 28 June 2023 (2023-06-28)<br>* paragraphs [0009], [0133]; claims 1-11; figures 1,2; tables 1-4 *<br>- - - - - | 1-8 | INV.<br>B60C1/00<br>B60C3/04<br>C08K3/04<br>C08K3/36 |
| Y | EP 3 783 060 A1 (GOODYEAR TIRE & RUBBER [US]) 24 February 2021 (2021-02-24)<br>* paragraphs [0097] - [0106]; claims 1-12; tables 1,2 *<br>- - - - - | 1-8 | C08L9/06 |

TECHNICAL FIELDS
SEARCHED (IPC)

B60C
C08K
C09J
C08L

The present search report has been drawn up for all claims

| Place of search | Date of completion of the search | Examiner |
|---|---|---|
| Munich | 29 April 2025 | Carneiro, Joaquim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 7393

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2025

| Patent document cited in search report | | Publication date | Patent family member(s) | Publication date |
|---|---|---|---|---|
| EP 4201705 | A1 | 28-06-2023 | CN 115175818 A | 11-10-2022 |
| | | | EP 4201705 A1 | 28-06-2023 |
| | | | JP 7140310 B1 | 21-09-2022 |
| | | | JP WO2022074932 A1 | 14-04-2022 |
| | | | US 2023364944 A1 | 16-11-2023 |
| | | | WO 2022074932 A1 | 14-04-2022 |
| EP 3783060 | A1 | 24-02-2021 | BR 102020015387 A2 | 20-04-2021 |
| | | | CN 112300460 A | 02-02-2021 |
| | | | DE 202020006026 U1 | 13-05-2024 |
| | | | DE 202020006027 U1 | 13-05-2024 |
| | | | DE 202020006028 U1 | 16-05-2024 |
| | | | EP 3783060 A1 | 24-02-2021 |
| | | | JP 7645619 B2 | 14-03-2025 |
| | | | JP 2021021070 A | 18-02-2021 |
| | | | KR 20210015671 A | 10-02-2021 |
| | | | US 2021032442 A1 | 04-02-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020041035 A
- JP 2009002594 A
- EP 3427975 A
- JP 6856781 B
- EP 3173251 A

**Non-patent literature cited in the description**

- *Akita Prefectural University Web Journal B/2019*, vol. 6, 216-222
- *Rubber Chemistry and Technology*, 2012, vol. 85 (3), 408-449
- A Comparison of Surface Morphology and Chemistry of Pyrolytic Carbon Blacks with Commercial Carbon Blacks. *Powder Technology*, 2005, vol. 160, 190-193